# EUROPÄISCHE PATENTSCHRIFT

(11) **EP 2 694 262 B1**
(45) Veröffentlichungstag und Bekanntmachung des Hinweises auf die Patenterteilung: **19.08.2015**
(21) Anmeldenummer: 12701886.9
(22) Anmeldetag: 27.01.2012
(51) Int. Cl.: B29B 11/16, B29C 70/20, B29C 70/56, B29C 70/54, B29C 70/38

(54) **VORRICHTUNG UND VERFAHREN ZUR HERSTELLUNG VON FASERVORFORMLINGEN, DIE INSBESONDERE EINE VORSTUFE BEI DER HERSTELLUNG VON FASERVERSTÄRKTEN KUNSTSTOFF-BAUTEILEN DARSTELLEN**
DEVICE AND METHOD FOR PRODUCING FIBER PREFORMS, WHICH ARE A PRECURSOR IN THE PRODUCTION OF FIBER-REINFORCED PLASTIC COMPONENTS IN PARTICULAR
DISPOSITIF ET PROCÉDÉ DE FABRICATION DE PRÉFORMES À FIBRES CONSTITUANT NOTAMMENT UNE PHASE PRÉALABLE DANS LA FABRICATION DE COMPOSANTS PLASTIQUES RENFORCÉS PAR FIBRES

(30) Priorität: 08.04.2011 DE 102011007020
(43) Veröffentlichungstag der Anmeldung: 12.02.2014
(73) Patentinhaber: Voith Patent GmbH, 89522 Heidenheim (DE)
(72) Erfinder: GÖTTINGER, Marco, 81543 München (DE); KAISER, Michael, 81547 München (DE)
(86) Internationale Anmeldenummer: PCT/EP2012/051293
(87) Internationale Veröffentlichungsnummer: WO 2012/136393

(56) Entgegenhaltungen:
- DE-A1- 19 922 799
- US-A- 2 934 317
- US-A1- 2011 000 608

## Beschreibung

Die Erfindung betrifft eine Vorrichtung zur Herstellung von Faservorformlingen, die insbesondere eine Vorstufe bei der Herstellung von faserverstärkten Kunststoff-Bauteilen darstellen, wobei die Vorrichtung mehrere Abwickelstationen für die Bereitstellung mehrerer Garne oder Rovings, mehrere Greifer, die jeweils einzelne oder mehrere Garne oder Rovings an ihrem Anfang greifen können, und wenigstens ein erstes Formwerkzeug aufweist, wobei jeder Greifer auf einem Pfad zwischen einer Maximalposition und einer Abholposition hin und her bewegbar ist, und wobei die Abholposition an einer Garnübergabestelle vorgesehen ist und näher an der Abwickelstation ist als die Maximalposition.

Weiterhin betrifft die Erfindung ein Verfahren zur Herstellung von Faservorformlingen, die beispielsweise eine Vorstufe bei der Herstellung von faserverstärkten Kunststoff-Bauteilen darstellen, insbesondere unter Verwendung einer erfindungsgemäßen Vorrichtung, welches folgende Verfahrensschritte nacheinander aufweist:
- Spannen von Garnen oder Rovings mithilfe mehrerer Greifer
- Drapieren der Garne oder Rovings über ein erstes Formwerkzeug
- Abtrennen der Garne oder Rovings.

Faserverstärkter Kunststoff besteht aus Matrixmaterial, das u.a. die Steifigkeit ergibt und aus Fasern, die in das Matrixmaterial eingebettet sind und die u.a. die Zugfestigkeit liefern. Faserverstärkter Kunststoff wird besonders für hochbelastetete Bauteile verwendet, die trotzdem noch möglichst leicht sein sollen. Da die Fasern in Querrichtung keine Festigkeit vermitteln, müssen die Fasern so ausgerichtet sein, dass ihre Längsrichtung mit der jeweiligen Belastungsrichtung möglichst gut übereinstimmt. Um das zu erreichen, müssen die Fasern oft in verschiedene Richtungen gelegt werden. Je besser und genauer die Faserlage an die Belastung angepasst ist, umso besser wird das Bauteil sein. Für Bauteile aus faserverstärktem Kunststoff gibt es zahlreiche Herstellverfahren. Für die Produktion von großen Stückzahlen gut anwendbare Verfahren gibt es derzeit allerdings nur bei rotationssymmetrischen oder platten- bzw. strangförmigen Bauteilen durch Wickeln oder Platten- bzw. Strangpressen.

Komplexere hochwertige 3-D-Strukturen lassen sich dagegen nur sehr aufwändig herstellen, da das Herstellen der benötigten Faservorformlinge schwierig, langsam und teuer ist. Hochwertige Strukturen werden meist mit Endlosfasern hergestellt. Bei vielen Verfahren werden zunächst Faservorformlinge entsprechend der gewünschten dreidimensionalen Bauteilform, sogenannte Preforms hergestellt, die überwiegend aus Fasern bestehen, welche oft in mehreren Lagen übereinander angeordnet sind, um die notwendigen Faserrichtungen zu erzielen. Anschließend werden die Faservorformlinge dann mit dem Matrixmaterial getränkt oder bestrichen, manchmal noch gepresst und zuletzt ausgehärtet. Sowohl für das Herstellen der Faservorformlinge als auch für das Tränken und/oder Aushärten der Bauteile können Formwerkzeuge entsprechend der gewünschten Bauteilform benutzt werden, auf oder in die der Faservorformling oder das Bauteil gelegt und/oder gepresst wird.

Damit die Faservorformlinge eine ausreichende Formstabilität für die Weiterverarbeitung aufweisen, werden sie mit kleinen Mengen Kleber oder Binder versehen und nach dem dreidimensionalen Drapieren fixiert, z.B. durch Trocknung oder durch Erhitzen und Abkühlen.

Die Faservorformlinge werden meist durch Übereinanderlegen und Fixieren von vorgefertigten und vorverbundenen flächigen Halbzeugen erstellt. Solche Halbzeuge sind etwa Tapes oder Gewebe, Gelege oder Vliese, bei denen eine Vielzahl von einzelnen Garnen oder Rovings bereits zu einem flächigen Gebilde verwebt, vernäht oder verklebt sind. Von einem Garn spricht man bei Verwendung sogenannter Endlosfasern, d.h. wenn die Fasern von einer Spule oder aus einem Knäuel abgewickelt werden. Zahlreiche Garne, die unverdreht gleichzeitig von einer Spule oder aus einem Knäuel abgewickelt werden, nennt man Garnbündel oder Roving. Dabei können die Rovings aus bis zu mehreren Zehntausend Einzelgarnen, die auch Filamente genannt werden, bestehen.

Die benötigten Einzelteile werden aus dem flächigen Halbzeug, welches meist als Rollenware zur Verfügung steht, nach einer Art Schnittmuster zugeschnitten, wie es auch aus DE 10 2008 011 658 A1 bekannt ist. Dann werden sie über ein Formwerkzeug gelegt und miteinander verbunden oder verpresst. Ein Beispiel für die Herstellung solcher Halbzeuge durch Verkleben oder Vernähen zeigt ebenfalls DE 10 2008 011 658 A1. Häufig ist trotz allem ein hoher Anteil manueller Tätigkeiten notwendig. Eine Vorrichtung zur maschinellen Herstellung von einfachen eindimensional gekrümmten Vorformlingen mit Abschnitten aus Halbzeug, die in einer Kassette vorgehalten und dann auf einem Kern abgelegt werden, ist aus DE 10 2008 042 574 A1 bekannt. Komplexere Formen sind maschinell noch nicht herstellbar.

Eine andere Möglichkeit zur Herstellung von Faservorformlingen für komplexere Bauteile ist das automatisierte Faserlegen. Dabei werden schmale Garnbündel oder Bänder aus Garnbündeln von einem Faserlegekopf über dem Formwerkzeug hin und her geführt, und dabei nebeneinander und übereinander darauf abgelegt, angepresst und fixiert. Für komplexere Bauteile ist eine aufwändige roboterartige Steuerung des Faserlegekopfes notwendig. Auch bei Einsatz von zwei, drei oder sogar vier Faserlegeköpfen parallel ist die Fertigungsgeschwindigkeit noch relativ langsam, da die Köpfe oft lange Wege zurücklegen müssen und da sukzessive mit schmalen Faserbündeln gearbeitet wird. Des Weiteren haben sie eine sehr lange und komplizierte Gamnachführung vom Spulengatter zum mehrachsig bewegten Legekopf. Eine solche Garnnachführung in Schläuchen mit speziellen Führungsklingen, um ein Verdrehen der Rovings zu verhindern, ist beispielsweise in US 2008/0202691 A1 dargestellt.

Die Aufgabe der Erfindung ist es, eine Vorrichtung und ein Verfahren zur Herstellung von Faservorformlingen zu schaffen, so dass auch komplexere, hochwertige Strukturen leichter automatisierbar, aber flexibel in der Form und Faserausrichtung, schneller und kostengünstiger gefertigt werden können.

Die Aufgabe wird durch die Vorrichtung mit den Merkmalen gemäß Anspruch 1 gelöst. Weitere vorteilhafte Merkmale sind in den abhängigen Ansprüchen genannt.

Erfindungsgemäß zeichnet sich die Vorrichtung dadurch aus, dass das erste Formwerkzeug eine Drapierposition im Bereich der Verbindungslinien zwischen den Maximalpositionen und den Garnübergabestellen und eine Abfahrposition außerhalb der Verbindungslinien aufweist und dass eine Regelung der Garnspannungen der Garne oder Rovings vorgesehen ist.

Beim Hineinfahren des Formwerkzeuges in die gespannte Garn- oder Rovinglage werden die Garne vom Formwerkzeug ausgelenkt und die Garnspannung würde sich unkontrolliert ändern. Durch die Regelung kann die Garnspannung während des Herstellvorgangs und insbesondere auch während des Drapierens kontrolliert werden. Das ist wichtig, da die Garne oder Rovings nicht überbelastet werden dürfen, andererseits aber auch nicht zu lose liegen sollen, um optimale Bauteilfestigkeiten zu erreichen. Bei Verwendung von flächigen Halbzeugen können die Fasern dagegen nur weitgehend ohne Spannung aufgebracht werden. Und beim Ablegen mit einem Faserlegekopf muss das Garn entsprechend der Dreidimensionalität der Form mit genau berechneter Garnüberlänge in Form von Schlaufen oder ähnlichem abgelegt werden, damit die Garne dann beim Drapieren, d.h. beim Hinein- oder Zusammenfahren der Formwerkzeuge, die gespannte Länge haben. Durch die Regelung der Garnspannungen kann auf die normalerweise notwendige Berechnung der Legebahnen, die kompliziert und zeitaufwändig ist, verzichtet werden. Der Herstellprozess wird dadurch einfacher und schneller und kann parallelisiert erfolgen, und zusätzlich kann er besonders flexibel an verschiedene Bauteilformen angepasst werden. Besonders beim seriellen Herstellen stark dreidimensional gestalteter Faservorformlinge kommen die Vorteile zum Tragen. Wichtig ist die Garnspannungsregelung auch wenn mehrere Greifer beim Aufspannen der Garne oder Rovings auf verschiedenen Zwischenpositionen, insbesondere nahe und entlang einer Außenkontur eines Formwerkzeuges, stehen. Später ergibt sich dadurch nur wenig Verschnitt an teurem Fasermaterial. Die dadurch allerdings auftretenden starken Auslenkungen der Garne oder Rovings können nur mit einer Regelung der Garnspannung beherrscht werden. In Verbindung mit einfachen, insbesondere linearen, Wegen für die Greifer, ergeben sich auch einfach Garnführungen mit geringer Reibung. Somit können mehrere Garne oder Rovings gleichzeitig, schnell und kontrolliert nebeneinander aufgespannt werden. Die Vorrichtung ist dadurch so ausgestaltet, dass Ablegeraten von mehr als 2 kg/min oder sogar mehr als 3 kg/min an Garn- oder Rovingmaterial erreicht werden können. Weiterhin können sowohl die Abwickelstationen als auch die Garnführung durch die Greifer ortsfest bleiben.

Da auf die sonst üblichen flächigen Halbzeuge verzichtet wird und statt dessen direkt aus Garnen oder Rovings der Faservorformling drapiert und hergestellt wird, sind die Materialkosten gegenüber bekannten Verfahren viel niedriger. Durch die Parallelisierung kann trotzdem eine kurze Herstellzeit erreicht werden. Die flächigen Halbzeuge sind aufgrund der Vorfertigung recht teuer. Bei stark dreidimensionalen Bauteilen besteht bei der Verwendung von großflächigen Halbzeugen zudem noch die Gefahr von Faltenbildung. Bei kleinflächigen steigt andererseits der Aufwand für das Zuschneiden und Verbinden der Einzelteile.

Vorteilhaft ist es auch, wenn ein zweites Formwerkzeug vorgesehen ist, welches mit dem ersten Formwerkzeug in der Drapierposition zusammengeführt werden kann und eine eigene Abfahrposition aufweist. Somit können auch kompliziertere dreidimensionale Formen genauer hergestellt werden, indem die Schar von Garnen oder Rovings zwischen den beiden Formwerkzeugen drapiert bzw. umgeformt wird. Bevorzugt ist das zweite Formwerkzeug, vom ersten Formwerkzeug aus gesehen, auf der gegenüberliegenden Seite der aufgespannten Garne oder Rovings angeordnet. Die Bewegung in die Drapierposition kann für das zweite Formwerkzeug bevorzugt gleichzeitig mit oder nach dem ersten Formwerkzeug erfolgen. Es kann aber auch vor dem ersten Formwerkzeug erfolgen. Selbstverständlich ist auch eine mehrteilige Ausführung der Formwerkzeuge möglich, um zum Beispiel größere oder komplexere Formwerkzeuge zusammenstellen zu können.

Bevorzugt ist das zweite Formwerkzeug als Haube ausgeführt, die über das erste Formwerkzeug passt und ein Spalt für die Garne oder Rovings zwischen dem ersten und zweiten Formwerkzeug bleibt. Dadurch dass die Garne oder Rovings in einen Spalt zwischen den Formwerkzeugen gezwungen werden, kann eine genauere Formgebung erreicht werden.

Für eine gute Drapierung ist es hilfreich, wenn die Bewegungsrichtung zwischen Abfahrposition und Drapierposition des ersten und/oder eines zweiten Formwerkzeuges im Wesentlichen senkrecht zu den Pfaden der Greifer angeordnet ist. Eine Abweichung von bis zu +/- 30° ist dabei denkbar. Bevorzugt sind die Pfade der Greifer in etwa Horizontal und die Bewegungsrichtung des Formwerkzeuges in etwa Vertikal. Für beide Richtungen ist ebenso eine Abweichung von bis zu +/-30° denkbar. Die Pfade der Greifer stimmen bevorzugt in etwa mit den gespannten Garnen oder Rovings vor dem Drapieren überein.

Bevorzugt ist die Regelung der Garnspannungen so ausgeführt, dass die Garnspannungen während der Bewegung des ersten und/oder eines zweiten Formwerkzeuges im Wesentlichen konstant gehalten werden kann, insbesondere auf den Werten der Gamspannungen, die beim Beginn der Bewegung vorliegen, und zwar besonders bevorzugt alle auf einem gleichen Wert. Dadurch ist die Garnspannungsregelung einfach und es werden optimale Festigkeitseigenschaften des Faservorformlings bzw. des späteren Bauteils erzielt.

Weiterhin ist es von Vorteil, jeder Abwickelstation oder jeder Gruppe von Abwickelstationen wenigstens eine Einrichtung zur Messung der jeweiligen Garnspannungen zuzuweisen, welche im Bereich der Garnübergabestelle und/oder zwischen der Abwickelstation und der Garnübergabestelle angeordnet ist und welche bevorzugt als Ringkraftaufnehmer an einer Umlenkstelle ausführt ist. Dadurch wird gewährleistet, dass jedes Garn- oder Roving-Bündel kontrollierte Garnspannung hat und entsprechend einzeln oder in kleinen Gruppen geregelt werden kann.

Mehrere Abwickelstationen bevorzugt maximal zehn, besonders bevorzugt maximal sechs können zu einer Gruppe zusammengefasst sein, die nur eine Garnspannungsregelung aufweisen. Um ausreichend flexibel zu sein, sollten mindestens so viele Abwickelstationen oder Gruppen von Abwickelstationen vorhanden sein, wie Greifer vorhanden sind.

Besonders flexibel und mit wenig Verschnitt arbeitend, wird die Vorrichtung, wenn die Greifer verschiedene individuelle Zwischenpositionen auf ihrem Pfad einnehmen können und diese die jeweiligen Anfänge der Garne oder Rovings an diesen Zwischenpositionen festhalten können. Dadurch können unterschiedliche Formen nachgebildet werden. Und es wird von jedem Greifer nur soviel Garn aufgespannt, wie für die entsprechende Stelle der Form benötigt wird. Besonders bevorzugt sind die Zwischenpositionen nahe und entlang einer Außenkontur eines der Formwerkzeuge angeordnet, so dass beim Trennen der Garne oder Rovings wenig Verschnitt an Fasermaterial anfällt.

Bevorzugt sind mindestens 5 Greifer, bevorzugt mindestens 10 Greifer, besonders bevorzugt mindestens 20 Greifer vorhanden. Um größere Bauteile mit ausreichender Anpassung an die jeweilige Form effektiv herstellen zu können, ist es hilfreich, wenn die Greifer eine Klemmbreite von 10 - 500 mm, bevorzugt von 20-200 mm aufweisen und/oder wenn alle Greifer zusammen eine Gesamtklemmbreite von mindestens 1 m, bevorzugt von mindestens 2 m, besonders bevorzugt von mindestens 3 m aufweisen.

Vorteilhafterweise ist jeder Abwickelstation oder jeder Gruppe von Abwickelstationen eine eigene Kupplungs- und/oder Bremseinrichtung zugeordnet. Weiterhin können die Garnspannungen für jede Abwickelstation einzeln geregelt werden. Dadurch kann ein gemeinsamer Antrieb an den Abwickelstationen oder den Garn-übergabestellen für die Ausgabe der Garne vorgesehen sein. Die einzelnen Kupplungs- und/oder Bremseinrichtungen steuern dann die entsprechende Garn-spannung bzw. trennen und verbinden den Antrieb mit Garnen.

Weiterhin können die einzelnen Abwickelstationen so ausgeführt sein, dass sie, insbesondere während der Bewegung des ersten und/oder eines zweiten Formwerkzeuges, jeweils unterschiedlich viel Garnlänge ausgeben können. Dadurch können auch kompliziertere Formen genauer gestaltet werden.

Weiterhin ist es hilfreich, wenn das erste und/oder ein zweites Formwerkzeug zumindest in der Abfahrposition drehbar und/oder kippbar ist und auch in gedrehter und/oder gekippter Lage in die jeweilige Drapierposition bewegt werden kann. Bevorzugt liegt die Drehachse des ersten und/oder eines zweiten Formwerkzeuges im Wesentlichen senkrecht zu den Pfaden und im Wesentlichen parallel zur Bewegungsrichtung zwischen Abfahrposition und Drapierposition des ersten und/ oder zweiten Formwerkzeuges. Die gewünschte Lagenorientierung der Fasern im Hinblick auf das spätere Bauteil kann durch die Drehung des Formwerkzeuges erzielt werden. Somit ist eine sehr flexible Gestaltung der Faservorformlinge und trotzdem eine einfache Automatisierung ohne komplizierte Berechnungen der Garnführungswege möglich.

Damit eine einfache und flexible Anpassung an verschiedene Bauteilformen möglich ist, kann das erste und/oder ein zweites Formwerkzeug leicht trennbar an einer Bewegungseinrichtung, insbesondere einem Hubtisch oder einer Absenkeinrichtung, befestigt sein. So können auch eine oder mehrere Lagen von Garnen oder Rovings zusammen mit einem Formwerkzeug an eine nachfolgende, insbesondere wieder erfindungsgemäß ausgestaltete Vorrichtung weitergegeben werden, um dort eine oder mehrere weitere Lagen aufzubringen.

Die Beschickung der Vorrichtung mit Garnen oder Rovings erfolgt von den Abwickelstationen. Die Abwickelstationen können beispielweise als sogenanntes Spulengatter ausgeführt sein. Dabei können die Garne oder Rovings von Spulen oder aus Gamknäuels (Bobbins) gezogen werden. Jede Garnübergabestelle bekommt Garne oder Rovings von einer oder von mehreren Abwickelstationen. Bevorzugt ist noch eine Trenneinrichtung, die die Garne oder Rovings zwischen einem Formwerkzeug und den Greifern trennen kann, und/oder eine Trenneinrichtung, die die Garne oder Rovings zwischen einem Formwerkzeug und den Garnübergabestellen trennen kann, vorgesehen.

Im Bereich der Garnübergabestellen oder zwischen Garnübergabestellen und Formwerkzeug können eine oder mehrere Spreizeinrichtungen vorgesehen werden, die dafür sorgen dass die Garne oder Rovings möglichst flächendeckend nebeneinander liegen bzw. aufgespannt sind und auch beim Drapieren nicht seitlich verrutschen. Eine solche Spreizeinrichtung kann beispielsweise als eine Art Kamm mit einer oder mehreren Reihen an Zinken ausgebildet sein.

Weiterhin kann das erste und/oder ein zweites Formwerkzeug mit einer Heizeinrichtung und/oder einer Anpresseinrichtung ausgestattet sein. Durch Temperatur-oder Druckerhöhung kann ein in der Lage vorhandener Binder aktiviert werden, so dass die Garne oder Rovings in der vorgegebenen Form fixiert und miteinander zunächst zu einer Lage und dann zum Faservorformling verbunden werden. Als Bindermaterial können beispielsweise Fäden oder Vliese, die zumindest teilweise aus Thermoplast oder Klebstoff bestehen, mit drapiert werden. Dadurch wird gleich mit dem Fasermaterial auch das zum Fixieren nötige Bindermaterial aufgebracht. Das Bindermaterial kann auch durch Hybridfäden, die neben Fasermaterial auch Bindermaterial enthalten, oder durch Beschichten oder Besprühen der Garne oder Rovings eingebracht werden. Das Bindermaterial kann auch nach dem Drapieren der Garne und Rovings über einem Formwerkzeug aufgebracht, zum Beispiel aufgesprüht werden. Durch das Fixieren einer Lage von Garnen oder Rovings wird eine gewisse Stabilität erreicht für das Aufbringen einer weiteren Lage von Garnen oder Rovings oder für das Weiterverarbeiten des Faservorformlings.

Die Aufgabe wird durch das Verfahren mit den Merkmalen entsprechend Anspruch 10, mit einer Vorrichtung nach einem der Vorrichtungsansprüche, gelöst. Weitere vorteilhafte Merkmale für das Verfahren sind in den abhängigen Ansprüchen genannt.

Erfindungsgemäß zeichnet sich das Verfahren dadurch aus, dass das Drapieren durch Hineinfahren des ersten Formwerkzeugs in den Bereich der gespannten Garne oder Rovings erfolgt und dass die Garnspannungen der Garne oder Rovings während des Hineinfahrens geregelt werden. Bevorzugt wird die Garnspannung auf einen Wert zwischen 1 und 50 N/m² geregelt. Die Vorteile der Erfindung wurden bereits bei der Vorrichtung genannt und gelten auch für das Verfahren.

Bevorzugt wird beim Drapieren ein zweites Formwerkzeug, insbesondere eine Haube, verwendet, welches mit dem ersten Formwerkzeug zusammengefahren wird und bevorzugt werden die Garnspannungen auch während der Bewegung des zweiten Formwerkzeuges geregelt.

Unter Drapieren wird das Umformen bzw. in Form bringen der Garne oder Rovings mithilfe eines Formwerkzeuges verstanden. Das Drapieren kann in einer oder in mehreren Stufen erfolgen.

Weiterhin können die Garnspannungen während des Drapierens im Wesentlichen jeweils konstant gehalten werden, bevorzugt auf den Werten, die bei Beginn des Drapierens vorliegen, und besonders bevorzugt auf einem gleichen Wert. Das heißt die Garnspannungen werden beim Aufspannen der Garne oder Rovings für die Lage auf die gewünschten Werte, insbesondere alle auf den gleichen Wert, gebracht und dann werden sie während des Drapierens bzw. Umformens konstant gehalten.

Von Vorteil ist es auch, wenn die Garnspannungen im Bereich der Garnübergabestellen und/oder zwischen den Abwickelstationen und den Garnübergabestellen gemessen werden und wenn an den einzelnen Abwickelstationen und/oder an den einzelnen Garnübergabestellen Garn oder Roving zur Einstellung der geregelten Garnspannungen ausgegeben wird. Dadurch wird genau dann und dort Garn ausgegeben, wo es für das Drapieren gebraucht wird. Die Regelung bezieht sich bevorzugt auf den Messwert der Garnspannungen an den oben genannten Stellen. An den einzelnen Abwickelstationen und/oder an den einzelnen Garnübergabestellen kann verschieden viel Garn oder Roving, insbesondere zur Anpassung an die dreidimensionale Form des ersten und/oder zweiten Formwerkzeugs, ausgegeben werden.

Es kann auch von Vorteil sein, dass der jeweilige Greifer so verschoben wird, dass sich die Garnspannungen einstellen. Dies kann alternativ oder zusätzlich zur Regelung der Garnspannungen über die Ausgabe von Garnen oder Rovings eingesetzt werden.

Für die Fertigstellung oder Weiterbearbeitung der Faservorformlinge kann es vorteilhaft sein, wenn nach und/oder während des Drapierens die Garne oder Rovings formstabil fixiert werden, insbesondere durch eine Aktivierung von Bindermaterial, das zum Beispiel bereits mit den Garnen oder Rovings aufgelegt worden ist. Bevorzugt geschieht das durch Erwärmen und/oder Pressen. Das Fixieren kann bei jeder Lage separat und/oder nach der letzten Lage erfolgen.

Nach dem Drapieren und nach oder während des Fixierens werden die Garne oder Rovings zwischen Formwerkzeug und Greifer und/oder zwischen Formwerkzeug und Garnübergabestelle durchtrennt. Es verbleibt nur sehr wenig Verschnitt an Fasermaterial an den Greifern. Das Fasermaterial zwischen Formwerkzeug und Garnübergabestellen kann durch Zurückspulen wieder aufgewickelt und weiterverwendet werden.

Bei einer seriellen Herstellung kann es vorgesehen sein, dass das Verfahren mehrmals nacheinander für das Ablegen mehrerer Lagen von Garnen oder Rovings auf dem ersten Formwerkzeug durchgeführt wird. Dies kann innerhalb einer erfindungsgemäßen Vorrichtung erfolgen oder das Formwerkzeug wird nach dem Auflegen und Fixieren der einen Lage in eine oder mehrere weitere erfindungsgemäße Vorrichtungen weitertransportiert, in denen jeweils eine weitere Lage an Garnen oder Rovings nach dem erfindungsgemäßen Verfahren aufgelegt wird.

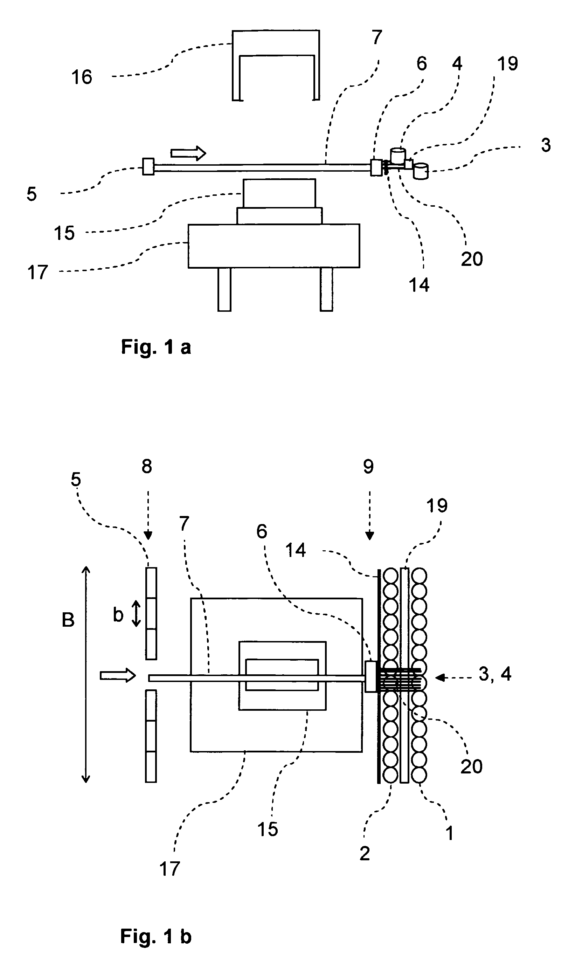

Anhand von Ausführungsbeispielen werden weitere vorteilhafte Merkmale der Erfindung erläutert unter Bezugnahme auf die Zeichnungen. Sie zeigen in den **Figuren 1** **a - 7 b** eine bevorzugte Ausführungsform der erfindungsgemäßen Vorrichtung bei verschiedenen Verfahrensschritten:
- **Fig. 1a**: Seitenansicht während Greifer Garne oder Rovings holt
- **Fig. 1b**: Draufsicht während Greifer Garne oder Rovings holt
- **Fig. 2a**: Seitenansicht nach Spannen der Garne oder Rovings
- **Fig. 2b**: Draufsicht nach Spannen der Garne oder Rovings
- **Fig. 3a**: Seitenansicht nach einem ersten Drapierschritt der ersten Lage
- **Fig. 3b**: Draufsicht nach einem ersten Drapierschritt der ersten Lage
- **Fig. 4a**: Seitenansicht nach einem zweiten Drapierschritt der ersten Lage
- **Fig. 4b**: Draufsicht nach einem zweiten Drapierschritt der ersten Lage
- **Fig. 5a**: Seitenansicht nach dem Abtrennen der Garne oder Rovings
- **Fig. 5b**: Draufsicht nach dem Abtrennen der Garne oder Rovings
- **Fig. 6a**: Seitenansicht nach Drehen der Formwerkzeuge und während Greifer Garne oder Rovings für die zweite Lage holen
- **Fig. 6b**: Draufsicht nach Drehen der Formwerkzeuge und während Greifer Garne oder Rovings für die zweite Lage holen
- **Fig. 7a**: Seitenansicht nach einem zweiten Drapierschritt der zweiten Lage
- **Fig. 7b**: Draufsicht nach einem zweiten Drapierschritt der zweiten Lage
und in den **Figuren 8** **a - c** eine weitere bevorzugte Ausfühungsform der erfindungsgemäßen Vorrichtung bei verschiedenen Verfahrensschritten:
- **Fig. 8a**: Draufsicht nach Aufbringen der ersten Lage
- **Fig. 8b**: Draufsicht nach Aufbringen einer weiteren Lage
- **Fig. 8c**: Draufsicht nach Aufbringen noch einer weiteren Lage.

Nachfolgend werden die Figuren und die Ausführungsbeispiele detaillierter beschrieben.

In einer besonders bevorzugten Ausführungsform der Vorrichtung und des Verfahrens ist die Vorrichtung geeignet dazu bzw. werden von der Vorrichtung die folgenden Verfahrensschritte nacheinander oder teilweise parallel zueinander ausgeführt:
- Bereitstellen der Garne oder Rovings und eventuell des Bindermaterials
- Greifen der benötigten Garne oder Rovings und eventuell des Bindermaterials
- Spannen der benötigten Garne oder Rovings durch entsprechendes Positionieren der Greifer
- Erstes Drapieren über ein erstes Formwerkzeug
- Zweites Drapieren mit einem zweiten Formwerkzeug
- Fixieren der Lage aus Garnen oder Rovings
- Abtrennen der Garne oder Rovings auf beiden Seiten der Formwerkzeuge
- Rückspulen der ausgegebenen und nicht benötigten Garne oder Rovings
- Öffnen der Formwerkzeuge
- Drehen und/oder Weitergeben eines Formwerkzeuges mit der aufgebrachten Lage

Wiederholung des Ablaufes für das Aufbringen weiterer Lagen in derselben Vorrichtung oder in einer oder mehreren weiteren erfindungsgemäßen Vorrichtungen bis zur Fertigstellung des Faservorformlings.

Als Fasermaterial für die Garne oder Rovings können Fasern z.B. aus Kohlenstoff (Carbon), Glas, oder Aramid oder andere Fasern verwendet werden. Und als Matrixmaterial für den faserverstärkten Kunststoff kommen z.B. thermoplastischer oder duroplastischer Kunststoff, Epoxidharz, anderer Kunststoff (Polymere) oder anderes Harz in Frage. Als Bindermaterial kann thermoplastischer Kunststoff oder Klebstoff verwendet werden. Es kann entweder bereits als Hybridgarn oder Hybrid-Roving vorliegen, d.h. einzelne Fasern oder Garne sind aus Bindermaterial, oder es kann zusammen mit den Garnen oder Rovings vom Greifer mit aufgespannt werden oder es wird auf die drapierten Garne oder Rovings aufgebracht oder aufgesprüht.

In **Fig. 1a** und **1b** ist der grundsätzliche Aufbau der Vorrichtung zu sehen. Die Bereitstellung der Garne oder Rovings erfolgt über eine Vielzahl von Abwickelstationen, in denen das Fasermaterial in Form von Spulen oder Garnknäuel (sogenannte Bobbins) bereitgestellt wird, und die in mehreren Reihen 1,2 nebeneinander, hintereinander oder übereinander angeordnet sind. Die Spulen können auch, wie gezeigt in Fig.1a eine obere und eine untere Reihe bilden. Die Anfänge der Garne oder Rovings 20 sind nur im jeweils benutzten Bereich für die benutzten Abwickelstationen 3,4 schematisch dargestellt. Auch alle anderen Anfänge werden zu den entsprechenden Garnübergabestellen 14 eingefädelt, so dass sie von den zugehörigen Greifern in den Abholpositionen 9 erfasst werden können. So etwas bezeichnet man zusammen auch als Spulengatter.

Auf der anderen Seite sind die Greifer 5 in ihren Maximalpositionen 8, die in diesem Fall auch den Ausgangspositionen entsprechen, dargestellt. Die Klemmbreite eines Greifers ist b und die Gesamtklemmbreite aller Greifer ist B. Auch wenn nur gleichbreite Greifer dargestellt sind, so sind selbstverständlich auch Greifer mit unterschiedlichen Breiten möglich. Die Greifer müssen auch nicht unbedingt ihre Maximal- und Abholpositionen in einer Linie haben. Weiterhin sind ein erstes Formwerkzeug 15 auf einem Hubtisch 17 und ein zweites Formwerkzeug 16, das als Haube ausgeführt ist, in Abfahrposition also außerhalb der Pfade der Greifer dargestellt. Das zweite Formwerkzeug ist in der Draufsicht nicht dargestellt. Und eine entsprechende Bewegungs- oder Absenkeinrichtung für das zweite Formwerkzeug ist auch nicht extra dargestellt. Weiterhin gibt es einen Bindermaterialvorrat 19, der beispielsweise zwischen den Reihen der Abwickelstationen angeordnet sein kann.

Ein Greifer 6 befindet sich in Abholposition und holt die seiner Anordnung in der Vorrichtung entsprechenden Garne oder Rovings, indem er deren Anfänge greift. Der Greifer ist durch eine Führungsvorrichtung 7, z.B. ein Gestänge oder einen Kolben, verschiebbar. Die Greifer können sich einzeln, aber nur linear und auf parallelen Pfaden nebeneinander zwischen Abhol- und Maximalposition bewegen, dadurch ist eine einfach Automatisierung und eine schnelle parallele Bewegung möglich. Es können wie dargestellt mehrere Abwickelstationen zu einer Gruppe zusammengefasst und einem Greifer zugeordnet werden. Ein Greifer kann mehrere Garne oder Rovings zusammen greifen. Auf jeden Fall sollten mindestens so viele Abwickelstationen wie Greifer vorgesehen sein.

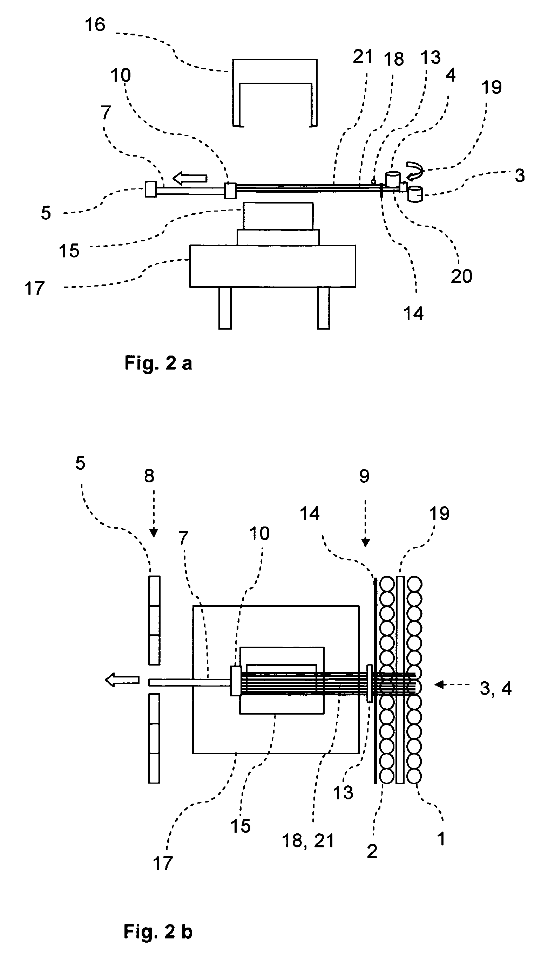

**Fig. 2a** und **2b** stellen die aufgespannten Garne oder Rovings 21 dar, die der Greifer 10 durch das Verfahren in seine Zwischenposition herausgezogen hat. Das kann durch ein aktiv angetriebenes Abwickeln unterstützt werden. Die Zwischenposition befindet sich nahe an der Außenkontur der Formwerkzeuge bzw. nahe der späteren Lage der Außenkontur, wenn die Formwerkzeuge in ihre Drapierposition gebracht sind. Zusammen mit den Garnen oder Rovings kann auch Bindermaterial 18, beispielsweise in Form von Binderfäden oder Bindervliesen, vom Greifer mit aufgespannt werden. Es kann auch wie dargestellt eine obere und eine untere Reihe von Abwickelstationen geben, so dass das Bindermaterial zwischen der oberen und der unteren Schar von Garnen oder Rovings aufgespannt wird. Beim Herausziehen kann das Bindermaterial im Bereich der Garnübergabestellen 14, insbesondere durch eine Heizeinrichtung, voraktiviert werden, so dass die Garne oder Rovings gleich beim Beginn des Drapierens schon etwas aneinander fixiert werden. Außerdem kann im Bereich der Garnübergabestellen eine Spreizeinrichtung vorgesehen sein, die als eine Art Kamm mit einer oder mehreren Reihen von Zinken ausgeführt sein kann. So wird gewährleistet, dass die Garne oder Rovings flächendeckend nebeneinander liegen und auch beim späteren Drapieren nicht seitlich verrutschen. Die Spreizeinrichtung kann auch entlang der Garnwege oder entlang der Greiferpfade verschiebbar sein. Dargestellt ist noch eine Möglichkeit für eine Garnspannungsmesseinrichtung 13.

Unter Drapieren wird das Umformen bzw. in Form bringen der Garne oder Rovings mithilfe eines Formwerkzeuges verstanden. Das Drapieren kann in einer oder in mehreren Stufen erfolgen, indem das oder die Formwerkzeuge gleichzeitig oder nacheinander in die Lage aus aufgespannten Garnen oder Rovings hineinbewegt werden. Während des Drapierens ist es von Vorteil die Garnspannungen zu regeln, insbesondere konstant zu halten. D.h. es wird soviel Garn oder Roving ausgegeben, wie für das Drapieren an der entsprechenden Stelle des Formwerkzeuges notwendig ist. Um das zu erreichen können Brems- und Kupplungseinrichtungen vorgesehen sein. Bevorzugt ist jeder Abwickelstation oder jeder Gruppe von Abwickelstationen eine entsprechende Regelung zugeordnet. Damit wird verhindert, dass die Garne oder Rovings überbelastet oder zu lose verlegt werden. Die Garnspannungen können auch durch geeignete Messeinrichtungen im Bereich der Garnübergabestellen und/oder zwischen den Abwickelstationen und den Garnübergabestellen gemessen werden. Bevorzugt liegt der Wert der Garnspannungen zwischen 1 und 50 N/m².

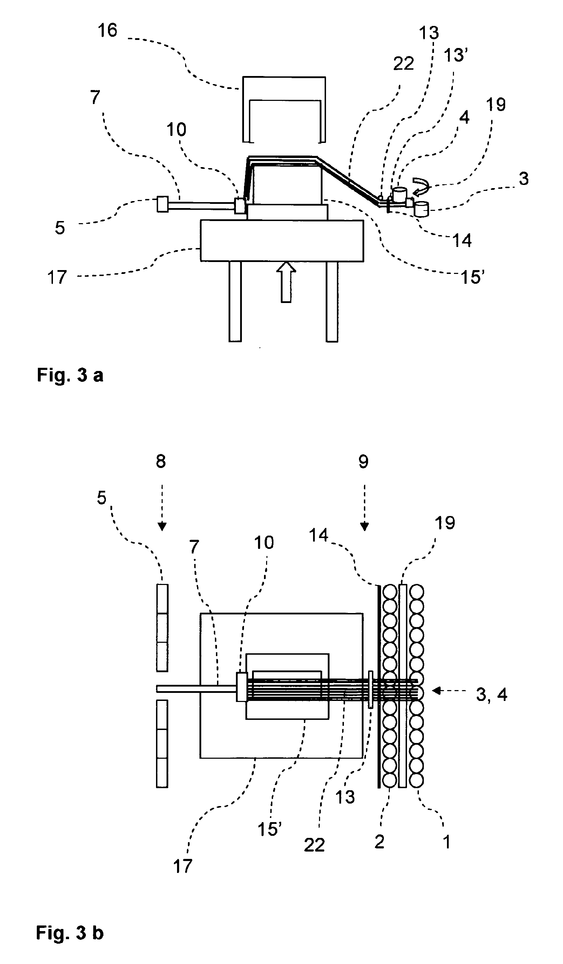

In den **Fig. 3a** und **3b** ist der Zustand nach dem ersten Drapieren dargestellt. Vom Hubtisch 17 wurde das erste Formwerkzeug 15' in die Drapierposition bewegt. Dadurch werden die Garne oder Rovings 22 ausgelenkt und über das Formwerkzeug 15' drapiert. Der Greifer 10 fixiert die Anfänge der Garne nahe der Außenkontur des Formwerkzeuges 15'. Nach diesem Schritt kann alternativ oder zusätzlich Bindermaterial auf die Garne oder Rovings aufgebracht oder aufgesprüht werden.

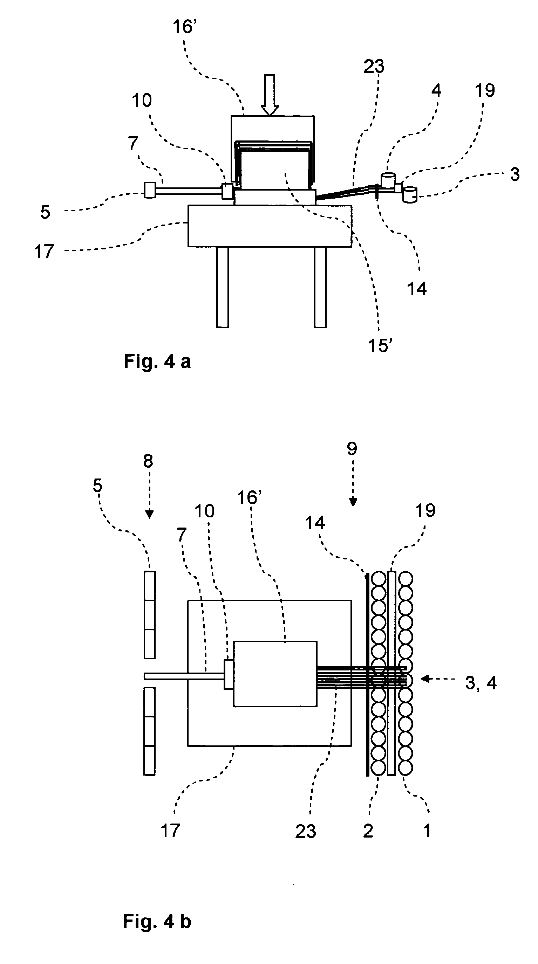

Im nächsten Schritt werden die Garne oder Rovings mithilfe des zweiten Formwerkzeuges 16', das in seine Drapierposition bewegt wurde, weiter drapiert bzw. umgeformt (**Fig. 4a** und **4** **b**)**.** Durch das Zusammenwirken der beiden Formwerkzeuge, zwischen denen sich die Lage an Garnen oder Rovings befindet, ist eine genaue Formgebung möglich. Die Formwerkzeuge können auch zusammengepresst werden und eines, bevorzugt das zweite, oder beide Formwerkzeuge können beheizt sein, so dass das Bindermaterial aktiviert wird und die Garne oder Rovings formstabil zu einer Lage fixiert werden. Gleichzeitig mit oder nach dem Fixieren werden die Garne oder Rovings an beiden Seiten der Formwerkzeuge abgetrennt, also zwischen Greifer und Formwerkzeug und zwischen Garnübergabestellen und Formwerkzeug. In einer Ausführungsform kann die Trenneinrichtung mit dem ersten oder zweiten Formwerkzeug verbunden sein. Vorteilhaft ist es, wenn die Trennung zumindest auf der Seite der Garnübergabestellen nahe am Formwerkzeug erfolgt. Dadurch fällt wenig Verschnitt an teurem Fasermaterial an und es ist weniger Nachbearbeitung des Faservorformlings nötig.

Die abgetrennten Garne oder Rovings 23 können über eine Rückspuleinrichtung wieder zurückgezogen und aufgewickelt oder über entsprechende Gamführung zwischengespeichert werden. Das Rückspulen erfolgt so, dass wieder Anfänge der Garne oder Rovings im Bereich der Garnübergabestellen 14 so zu liegen kommen, dass sie von den Greifern abgeholt werden können, ohne dass allzu viel Verschnittmaterial anfällt. Zur Erfassung der Anfänge können Sensoren eingesetzt werden.

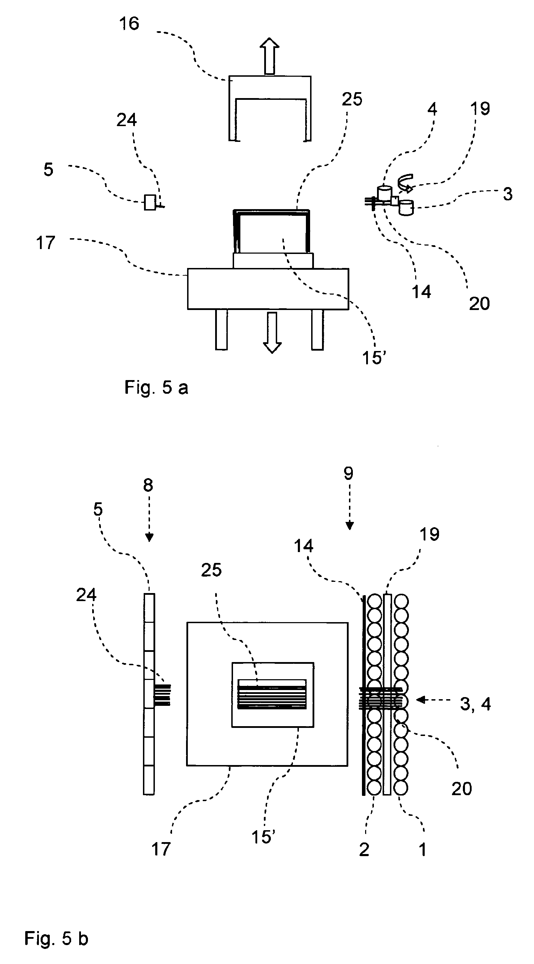

In **Fig. 5a** und **5b** sind die Garne oder Rovings bereits zurückgespult oder an der Garnübergabestelle abgeschnitten worden, so dass sich wieder Anfänge an den Garnübergabestellen befinden. An den Greifern entsteht auch nur wenig Verschnitt 24 an Fasermaterial , da sie jeweils nahe und entlang der Außenkontur der Formwerkzeuge positioniert waren und nur soviel Garn aufgespannt haben, wie auch gebraucht wurde. Die Formwerkzeuge 15,16 werden wieder in ihre Abfahrposition gebracht. Auf dem ersten Formwerkzeug verbleibt die erste geformte Lage 25.

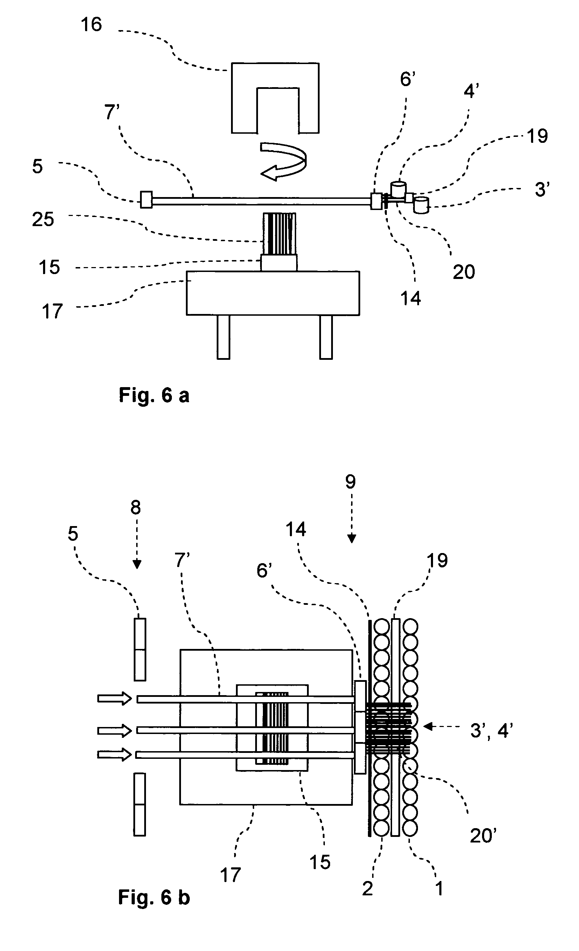

**Fig. 6** **a** und **6 b** zeigen das erste und zweite Formwerkzeug 15,16 in gedrehter Lage. Hier wurden sie um 90° gedreht. Es ist aber auch ein anderer Drehwinkel beispielsweise etwa 30°, 45°, 60°, oder eine Kippung möglich. Bevorzugt liegt der Drehwinkel zwischen 10 und 170°. Das richtet sich danach, wie und mit welcher Faserorientierung die weitere Lage an Garnen oder Rovings aufgebracht werden soll. Die benötigten Greifer 6' sind in der Abholposition, um die Anfänge 20 der benutzten Garne oder Rovings zu greifen.

Dann werden die Garne oder Rovings der weiteren Lage aufgespannt bis zu einer Zwischenposition der Greifer und drapiert, indem das erste und das zweite Formwerkzeug 15', 16' in die Drapierposition gefahren werden.

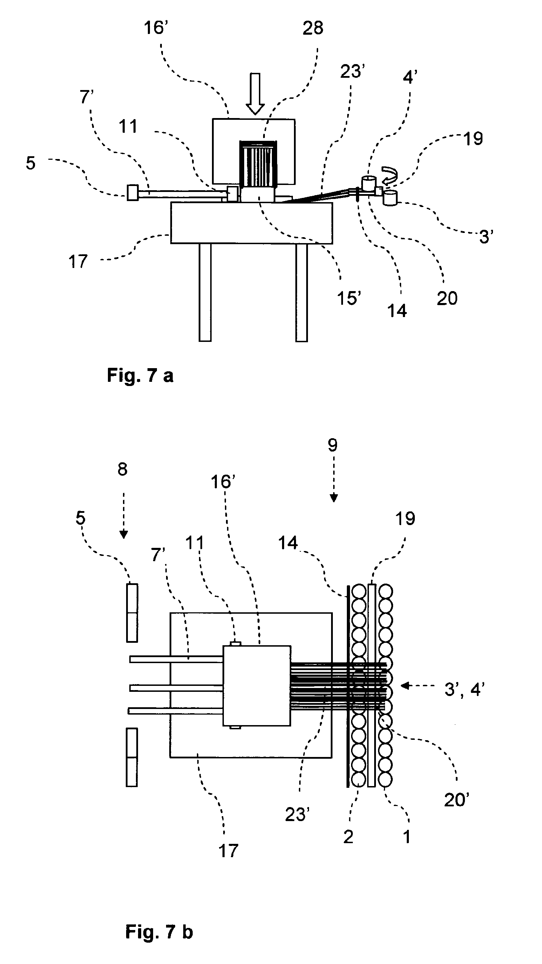

**Fig. 7** **a** und **7 b** zeigen die Vorrichtung nachdem die Garne oder Rovings abgetrennt wurden. Die benutzen Greifer 11 stehen in einer Zwischenposition. Bei nicht rechteckigen Formwerkzeugen oder anderen Drehwinkeln können die Greifer 11 auch auf verschiedenen Zwischenpositionen stehen. Die weitere Lage aus Garnen oder Rovings und eventuell aus Bindermaterial kann ebenfalls durch Erwärmen und/oder Pressen formstabil fixiert und mit der ersten Lage verbunden werden. Zusammen bilden sie den Faservorformling 28.

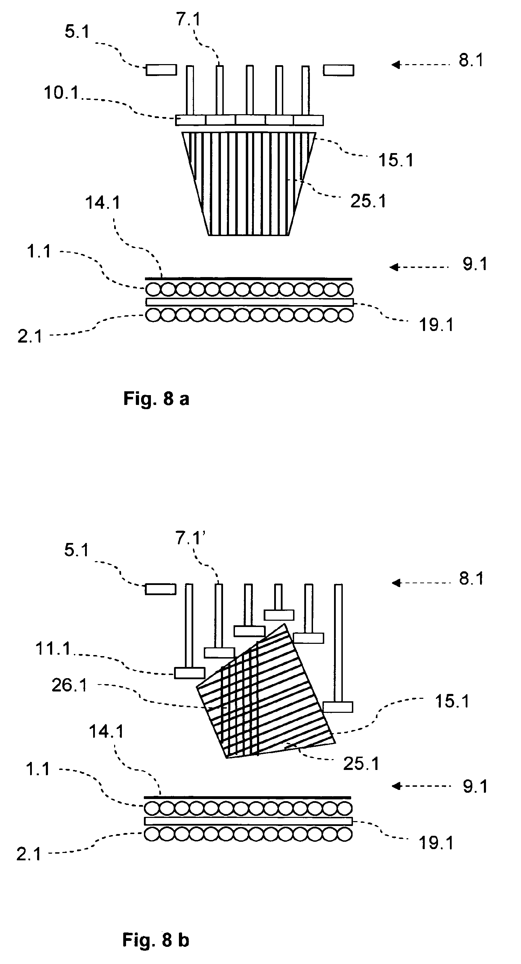

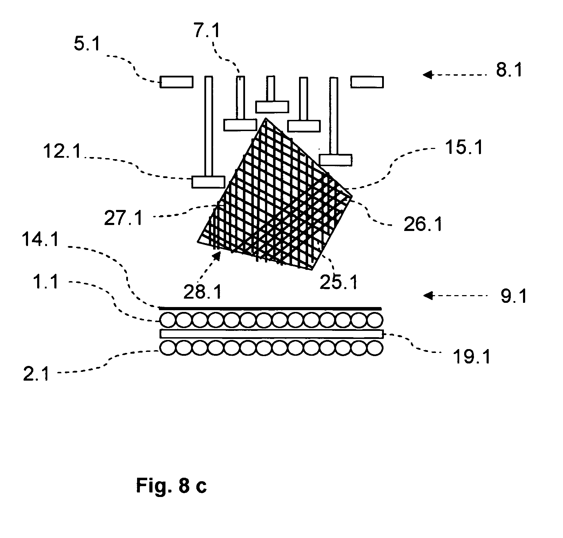

In **Fig. 8** **a** ist eine weitere Ausführungsform dargestellt, wie sie zum Beispiel bei der Herstellung von Faservorformlingen für Motorhauben Verwendung finden kann. Die benutzten Greifer 10.1 stehen auf einer Zwischenposition, die nicht benötigten Greifer 5.1 sind in der Maximalposition 8.1. Auf dem ersten Formwerkzeug 15.1 ist eine erste Lage an Garnen oder Rovings drapiert und fixiert. Das zweite Formwerkzeug ist nicht dargestellt. Die Bevorratung der Garne oder Rovings erfolgt in den Abwickelstationen 1.1, 2.1. Weiterhin sind ein Bindermaterialvorrat 19.1 und die Garnübergabestellen 14.1 vorhanden.

Das Aufbringen einer oder mehrerer weiterer Lagen kann in derselben Vorrichtung erfolgen oder in einer oder mehreren weiteren erfindungsgemäßen Vorrichtungen, an die das erste Formwerkzeug zusammen mit der ersten Lage übergeben wird. In **Fig. 8b** ist eine weitere Lage 26.1 auf das gedrehte Formwerkzeug drapiert. Es sind der Übersicht halber nur ein paar Garne oder Rovings dargestellt. Die benutzten Greifer 11.1 stehen entlang der Außenkontur des Formwerkzeuges und bilden es möglichst genau ab. Für eine noch genauere Anpassung können schmälere oder auch unterschiedlich breite Greifer eingesetzt werden.

**Fig. 8c** zeigt wie noch eine weitere Lage aufgebracht wurde. Die benutzten Greifer 12.1 stehen wieder entlang der Außenkontur. Nach dem Fixieren bilden die Lagen zusammen den Faservorformling 28.1.

### Bezugszeichenliste

- 1, 1.1 ,2 , 2.1: Reihen von Abwickelstationen
- 3, 3', 4, 4': Abwickelstationen in Benutzung
- 5, 5.1: Reihe von Greifern
- 6, 6': Greifer in Abholposition
- 7, 7.1, 7', 7.1': Führungsvorrichtung für Greifer
- 8, 8.1: Lage der Maximalpositionen
- 9, 9.1: Lage der Abholpositionen
- 10, 10.1, 11, 11.1, 12, 12.1: Greifer in Zwischenpositionen
- 13, 13': Messeinrichtung für Garn-Spannung
- 14,14.1: Garnübergabestellen (gegebenenfalls auch mit Spreizeinrichtung und/oder mit Einrichtung zur Bindervoraktivierung)
- 15: erstes Formwerkzeug in Abfahrposition
- 15', 15.1: erstes Formwerkzeug in Drapierposition
- 16: zweites Formwerkzeug in Abfahrposition
- 16': zweites Formwerkzeug in Drapierposition
- 17: Hubtisch
- 18: Bindermaterial
- 19, 19.1: Bindermaterialvorrat
- 20, 20': Anfänge der Garne oder Rovings
- 21: gespannte Garne oder Rovings
- 22: drapierte Garne oder Rovings
- 23, 23': abgetrennte Garne oder Rovings
- 24: Verschnitt
- 25: erste Lage von Garnen oder Rovings
- 26.1, 27.1: weitere Lage von Garnen oder Rovings
- 28,28.1: Faservorformling
- b: Klemmbreite eines Greifers
- B: Gesamtklemmbreite aller Greifer

## Patentansprüche

1. Vorrichtung zur Herstellung von Faservorformlingen (28, 28.1), die insbesondere eine Vorstufe bei der Herstellung von faserverstärkten Kunststoff-Bauteilen darstellen, wobei die Vorrichtung mehrere Abwickelstationen (1, 1.1, 2, 2.1, 3, 3', 4, 4') für die Bereitstellung mehrerer Garne oder Rovings, mehrere Greifer (5, 5.1), die jeweils einzelne oder mehrere Garne oder Rovings (20, 20')) an ihrem Anfang greifen können, und wenigstens ein erstes Formwerkzeug (15, 15', 15.1, 16, 16') aufweist, wobei jeder Greifer (5, 5.1) auf einem Pfad zwischen einer Maximalposition (8, 8.1) und einer Abholposition (9, 9.1) hin und her bewegbar ist, und wobei die Abholposition (9, 9.1) an einer Garnübergabestelle (14, 14.1) vorgesehen ist und näher an der Abwickelstation (1, 1.1, 2, 2.1) ist als die Maximalposition (8, 8.1),
**dadurch gekennzeichnet,**
**dass** das erste Formwerkzeug (15, 15', 15.1) eine Drapierposition im Bereich der Verbindungslinien zwischen den Maximalpositionen (8, 8.1) und den Garnübergabestellen (14, 14.1) und eine Abfahrposition außerhalb der Verbindungslinien aufweist und dass eine Regelung der Garnspannungen der Garne oder Rovings vorgesehen ist.

2. Vorrichtung nach Anspruch 1
**dadurch gekennzeichnet,**
**dass** ein zweites Formwerkzeug (16, 16') vorgesehen ist, welches mit dem ersten Formwerkzeug (15, 15', 15.1) in der Drapierposition zusammengeführt werden kann und eine eigene Abfahrposition aufweist.

3. Vorrichtung nach Anspruch 2
**dadurch gekennzeichnet,**
**dass** das zweite Formwerkzeug (16, 16') als Haube ausgeführt ist, die über das erste Formwerkzeug (15, 15', 15.1) passt und ein Spalt für die Garne oder Rovings zwischen dem ersten und zweiten Formwerkzeug bleibt.

4. Vorrichtung nach einem der vorherigen Ansprüche
**dadurch gekennzeichnet,**
**dass** die Regelung der Garnspannungen so ausgeführt ist, dass die Garnspannungen während der Bewegung des ersten und/oder eines zweiten Formwerkzeuges (15, 15', 15.1, 16, 16') im Wesentlichen konstant gehalten werden kann, insbesondere auf den Werten der Garnspannungen, die beim Beginn der Bewegung vorliegen, und zwar besonders bevorzugt alle auf einem gleichen Wert.

5. Vorrichtung nach einem der vorherigen Ansprüche
**dadurch gekennzeichnet,**
**dass** zu jeder Abwickelstation (1, 1.1, 2, 2.1, 3, 3', 4, 4') oder jeder Gruppe von Abwickelstationen (1, 1.1, 2, 2.1, 3, 3', 4, 4') wenigstens eine Einrichtung zur Messung (13, 13') der jeweiligen Garnspannungen vorgesehen ist, welche im Bereich der Garnübergabestelle (14, 14.1) und/oder zwischen der Abwickelstation (1, 1.1, 2, 2.1, 3, 3', 4, 4') und der Garnübergabestelle (14, 14.1) angeordnet ist und welche bevorzugt als Ringkraftaufnehmer an einer Umlenkstelle ausführt ist.

6. Vorrichtung nach einem der vorherigen Ansprüche
**dadurch gekennzeichnet,**
**dass** zumindest ein Teil der Greifer (10, 10.1, 11, 11.1, 12, 12.1) während der Bewegung des ersten und/oder eines zweiten Formwerkzeuges (15, 15', 15.1, 16, 16') auf einer Zwischenposition zwischen Abholposition (9, 9.1) und Maximalposition (8, 8.1) angeordnet ist.

7. Vorrichtung nach einem der vorherigen Ansprüche
**dadurch gekennzeichnet,**
**dass** mindestens 5 Greifer (5, 5.1), bevorzugt mindestens 10 Greifer (5, 5.1), besonders bevorzugt mindestens 20 Greifer (5, 5.1) vorhanden sind.

8. Vorrichtung nach einem der vorherigen Ansprüche
**dadurch gekennzeichnet,**
**dass** jeder Abwickelstation (1, 1.1, 2, 2.1, 3, 3', 4, 4') oder jeder Gruppe von Abwickelstationen (1, 1.1, 2, 2.1, 3, 3', 4, 4') eine eigene Kupplungs- und/oder Bremseinrichtung zugeordnet ist und/oder dass die Garnspannungen für jede Abwickelstation (1, 1.1, 2, 2.1, 3, 3', 4, 4') einzeln geregelt werden kann.

9. Vorrichtung nach einem der vorherigen Ansprüche
**dadurch gekennzeichnet,**
**dass** die Abwickelstationen (1, 1.1, 2, 2.1, 3, 3', 4, 4') so ausgeführt sind, dass sie, insbesondere während der Bewegung des ersten und/oder eines zweiten Formwerkzeuges (15, 15', 15.1, 16, 16'), jeweils unterschiedlich viel Garnlänge ausgeben können.

10. Verfahren zur Herstellung von Faservorformlingen (28, 28.1), die beispielsweise eine Vorstufe bei der Herstellung von faserverstärkten Kunststoff-Bauteilen darstellen unter Verwendung einer Vorrichtung nach einem der vorherigen Ansprüche, welches folgende Verfahrensschritte nacheinander aufweist:
- Spannen von Garnen oder Rovings mithilfe mehrerer Greifer (5, 5.1)
- Drapieren der Garne oder Rovings über ein erstes Formwerkzeug (15, 15', 15.1)
- Abtrennen der Garne oder Rovings
**dadurch gekennzeichnet,**
**dass** das Drapieren durch Hineinfahren des ersten Formwerkzeugs (15, 15', 15.1) in den Bereich der gespannten Garne oder Rovings (21) erfolgt und dass die Garnspannungen der Garne oder Rovings während des Hineinfahrens geregelt werden.

11. Verfahren nach Anspruch 10
**dadurch gekennzeichnet,**
**dass** beim Drapieren ein zweites Formwerkzeug (16, 16'), insbesondere eine Haube, mit dem ersten Formwerkzeug (15, 15', 15.1) zusammengefahren wird und dass die Garnspannungen auch während der Bewegung des zweiten Formwerkzeuges (16, 16') geregelt werden.

12. Verfahren nach einem der Ansprüche 10 oder 11
**dadurch gekennzeichnet,**
**dass** die Garnspannungen im Bereich der Garnübergabestellen (14, 14.1) und/oder zwischen den Abwickelstationen (1, 1.1, 2, 2.1, 3, 3', 4, 4') und den Garnübergabestellen (14, 14.1) gemessen werden und dass an den einzelnen Abwickelstationen (1, 1.1, 2, 2.1, 3, 3', 4, 4') und/oder an den einzelnen Garnübergabestellen (14, 14.1) Garn oder Roving zur Einstellung der geregelten Garnspannungen ausgegeben wird.

13. Verfahren nach einem der Ansprüche 10 bis 12
**dadurch gekennzeichnet,**
**dass** an den einzelnen Abwickelstationen (1, 1.1, 2, 2.1, 3, 3', 4, 4') und/oder an den einzelnen Garnübergabestellen (14, 14.1) verschieden viel Garn oder Roving, insbesondere zur Anpassung an die dreidimensionale Form des ersten und/oder zweiten Formwerkzeugs (15, 15', 15.1, 16, 16'), ausgegeben werden kann.

14. Verfahren nach einem der Ansprüche 10 bis 13
**dadurch gekennzeichnet,**
**dass** der jeweilige Greifer (10, 10.1, 11, 11.1, 12, 12.1) so verschoben wird, dass sich die Garnspannung einstellt.

15. Verfahren nach einem der Ansprüche 10 bis 14
**dadurch gekennzeichnet,**
**dass** nach und/oder während des Drapierens die Garne oder Rovings formstabil fixiert werden, insbesondere durch eine Aktivierung von Bindermaterial (18), und bevorzugt durch Erwärmen und/oder Pressen.

## Claims

1. Device for manufacturing fibrous preforms (28, 28.1) which in particular represent a preliminary stage in the manufacture of fibre-reinforced plastics components, wherein the device has a plurality of unwinding stations (1, 1.1, 2, 2.1, 3, 3', 4, 4') for providing a plurality of yarns or rovings, and a plurality of grippers (5, 5.1) which in each case may grip individual or a plurality of yarns or rovings (20, 20') at the leading end thereof, and at least one first forming tool (15, 15', 15.1, 16, 16'), wherein each gripper (5, 5.1) is movable to and fro on a path between a maximum position (8, 8.1) and a collecting position (9, 9.1), and wherein the collecting position (9, 9.1) is provided at a yarn-transfer point (14, 14.1) and is closer to the unwinding station (1, 1.1, 2, 2.1) than the maximum position (8, 8.1), **characterized in that** the first forming tool (15, 15' 15.1) has a draping position in the region of the connecting lines between the maximum positions (8, 8.1) and the yarn-transfer points (14, 14.1), and a detachment position outside of the connecting lines, and **in that** regulating the yarn tensions of the yarns or rovings is provided.

2. Device according to Claim 1,
**characterized in**
**that** a second forming tool (16, 16') which in the draping position can be brought together with the first forming tool (15, 15', 15.1) and has a dedicated detachment position is provided.

3. Device according to Claim 2,
**characterized in**
**that** the second forming tool (16, 16') is implemented as a hood which fits over the first forming tool (15, 15', 15.1) and a gap for the yarns or rovings remains between the first and second forming tool.

4. Device according to one of the preceding claims,
**characterized in**
**that** regulating the yarn tensions is implemented such that the yarn tensions during the movement of the first and/or a second forming tool (15, 15', 15.1, 16, 16') are able to be kept substantially constant, in particular at the values of the yarn tensions which exist at the commencement of the movement, particularly preferably so that all yarn tensions are specifically kept at one identical value.

5. Device according to one of the preceding claims,
**characterized in**
**that** for each unwinding station (1, 1.1, 2, 2.1, 3, 3', 4, 4') or each group of unwinding stations (1, 1.1, 2, 2.1, 3, 3', 4, 4') at least one installation for measuring (13, 13') the respective yarn tensions, which is disposed in the region of the yarn-transfer point (14, 14.1) and/or between the unwinding station (1, 1.1, 2, 2.1, 3, 3', 4, 4') and the yarn-transfer point (14, 14.1) and which is preferably implemented as an annular force transducer at a deflection point, is provided.

6. Device according to one of the preceding claims,
**characterized in**
**that** at least part of the grippers (10, 10.1, 11, 11.1, 12, 12.1) are disposed on an intermediate position between the collecting position (9, 9.1) and the maximum position (8, 8.1) during the movement of the first and/or a second forming tool (15, 15', 15.1, 16, 16').

7. Device according to one of the preceding claims,
**characterized in**
**that** at least 5 grippers (5, 5.1), preferably at least 10 grippers (5, 5.1), particularly preferably at least 20 grippers (5, 5.1) are present.

8. Device according to one of the preceding claims,
**characterized in**
**that** each unwinding station (1, 1.1, 2, 2.1, 3, 3', 4, 4') or each group of unwinding stations (1, 1.1, 2, 2.1, 3, 3', 4, 4') is assigned a dedicated clutch and/or brake installation and/or in that the yarn tensions can be individually regulated for each unwinding station (1, 1.1, 2, 2.1, 3, 3', 4, 4').

9. Device according to one of the preceding claims,
**characterized in**
**that** the unwinding stations (1, 1.1, 2, 2.1, 3, 3', 4, 4') are implemented such that they can in each case deliver different yarn lengths, in particular during the movement of the first and/or a second forming tool (15, 15', 15.1, 16, 16').

10. Method for manufacturing fibrous preforms (28, 28.1) which represent a preliminary stage in the manufacture of fibre-reinforced plastics components, for example, using a device according to one of the preceding claims, the method comprising the following method steps in succession:
- tensioning yarns or rovings with the aid of a plurality of grippers (5, 5.1)
- draping the yarns or rovings across a first forming tool (15, 15', 15.1)
- separating the yarns or rovings
**characterized in**
**that** draping is performed by driving the first forming tool (15, 15', 15.1) into the region of the tensioned yarns or rovings (21), and in that the yarn tensions of the yarns or rovings are regulated during driving in.

11. Method according to Claim 10,
**characterized in**
**that** during draping a second forming tool (16, 16'), in particular a hood, is driven close to the first forming tool (15, 15', 15.1), and in that the yarn tensions are regulated also during the movement of the second forming tool (16, 16').

12. Method according to one of Claims 10 or 11,
**characterized in**
**that** the yarn tensions are measured in the region of the yarn-transfer points (14, 14.1) and/or between the unwinding stations (1, 1.1, 2, 2.1, 3, 3', 4, 4') and the yarn-transfer points (14, 14.1), and in that yarn or roving for adjusting the regulated yarn tensions is delivered at the individual unwinding stations (1, 1.1, 2, 2.1, 3, 3', 4, 4') and/or at the individual yarn-transfer points (14, 14.1).

13. Method according to one of Claims 10 to 12,
**characterized in**
**that** different amounts of yarn or roving can be delivered at the individual unwinding stations (1, 1.1, 2, 2.1, 3, 3', 4, 4') and/or at the individual yarn-transfer points (14, 14.1), in particular in order to adapt to the three-dimensional shape of the first and/or second forming tool (15, 15', 15.1, 16, 16').

14. Method according to one of Claims 10 to 13,
**characterized in**
**that** the respective gripper (10, 10.1, 11, 11.1, 12, 12.1) is displaced such that the yarn tension is adjusted.

15. Method according to one of Claims 10 to 14,
**characterized in**
**that** the yarns or rovings are fixed in a dimensionally stable manner after and/or during draping, in particular by activating binder material (18), and preferably by heating and/or pressing.

## Revendications

1. Dispositif de fabrication de préformes à fibres (28, 28.1), qui représente en particulier une phase préalable dans la fabrication de composants plastiques renforcés par des fibres, dans lequel le dispositif présente plusieurs stations de déroulement (1, 1.1, 2, 2.1, 3, 3', 4, 4') pour la fourniture de plusieurs fils ou mèches, plusieurs pinces (5, 5.1), qui peuvent saisir respectivement un/une ou plusieurs fils ou mèches (20, 20') à leur début, et au moins un premier outil de formage (15, 15', 15.1, 16, 16'), dans lequel chaque pince (5, 5.1) est déplaçable en va et vient sur un chemin entre une position maximale (8, 8.1) et une position d'enlèvement (9, 9.1), et dans lequel la position d'enlèvement (9, 9.1) est prévue à un point de transfert de fil (14, 14.1) et est plus proche de la station de déroulement (1, 1.1, 2, 2.1) que la position maximale (8, 8.1), **caractérisé en ce que** le premier outil de formage (15, 15', 15.1) présente une position de drapage dans la région des lignes de liaison entre les positions maximales (8, 8.1) et les points de transfert de fil (14, 14.1) et une position de départ à l'extérieur des lignes de liaison et **en ce qu'**il est prévu une régulation des tensions de fil des fils ou des mèches.

2. Dispositif selon la revendication 1, **caractérisé en ce qu'**il est prévu un deuxième outil de formage (16, 16'), qui peut être amené dans la position de drapage avec le premier outil de formage (15, 15', 15.1) et qui présente une position de départ propre.

3. Dispositif selon la revendication 2, **caractérisé en ce que** le deuxième outil de formage (16, 16') est réalisé sous forme de hotte, qui s'ajuste au-dessus du premier outil de formage (15, 15', 15.1) et il reste une fente pour les fils et les mèches entre le premier et le deuxième outil de formage.

4. Dispositif selon l'une quelconque des revendications précédentes, **caractérisé en ce que** la régulation des tensions de fil est réalisée de telle manière que les tensions de fil puissent rester essentiellement constantes pendant le mouvement du premier et/ou d'un deuxième outil de formage (15, 15', 15.1, 16, 16'), en particulier à des valeurs des tensions de fil qui sont présentes au début du mouvement, notamment en particulier de préférence toutes à une même valeur.

5. Dispositif selon l'une quelconque des revendications précédentes, **caractérisé en ce qu'**il est prévu à chaque station de déroulement (1, 1.1, 2, 2.1, 3, 3', 4, 4') ou à chaque groupe de stations de déroulement (1, 1.1, 2, 2.1, 3, 3', 4, 4') au moins un dispositif pour la mesure (13, 13') des tensions de fil respectives, qui est disposé dans la région du point de transfert de fil (14, 14.1) et/ou entre la station de déroulement (1, 1.1, 2, 2.1, 3, 3', 4, 4') et le point de transfert de fil (14, 14.1) et qui est configuré de préférence sous forme de prise de force annulaire à un point de déviation.

6. Dispositif selon l'une quelconque des revendications précédentes, **caractérisé en ce qu'**au moins une partie des pinces (10, 10.1, 11, 11.1, 12, 12.1) est disposée pendant le mouvement du premier et/ou d'un deuxième outil de formage (15, 15', 15.1, 16, 16') à une position intermédiaire entre la position d'enlèvement (9, 9.1) et la position maximale (8, 8.1).

7. Dispositif selon l'une quelconque des revendications précédentes, **caractérisé en ce qu'**au moins 5 pinces (5, 5.1), de préférence au moins 10 pinces (5, 5.1), de préférence encore au moins 20 pinces (5, 5.1), sont présentes.

8. Dispositif selon l'une quelconque des revendications précédentes, **caractérisé en ce qu'**un dispositif d'accouplement et/ou de freinage propre est associé à chaque station de déroulement (1, 1.1, 2, 2.1, 3, 3', 4, 4') ou à chaque groupe de stations de déroulement (1, 1.1, 2, 2.1, 3, 3', 4, 4') et/ou **en ce que** les tensions de fil peuvent être régulées individuellement pour chaque station de déroulement (1, 1.1, 2, 2.1, 3, 3', 4, 4').

9. Dispositif selon l'une quelconque des revendications précédentes, **caractérisé en ce que** les stations de déroulement (1, 1.1, 2, 2.1, 3, 3', 4, 4') sont configurées de telle manière qu'elles puissent délivrer respectivement une longueur de fil différente notamment pendant le mouvement du premier et/ou d'un deuxième outil de formage (15, 15', 15.1, 16, 16').

10. Procédé de fabrication de préformes à fibres (28, 28.1), qui représente par exemple une phase préalable dans la fabrication de composants plastiques renforcés par des fibres avec utilisation d'un dispositif selon l'une quelconque des revendications précédentes, qui présente les étapes suivantes l'une après l'autre:
- tendre des fils ou des mèches à l'aide de plusieurs pinces (5, 5.1),
- draper les fils ou les mèches au moyen d'un premier outil de formage (15, 15', 15.1),
- séparer les fils ou les mèches,
**caractérisé en ce que** le drapage est effectué en introduisant le premier outil de formage (15, 15', 15.1) dans la région des fils tendus ou des mèches tendues (21) et **en ce que** les tensions de fils ou de mèches sont régulées pendant l'introduction.

11. Procédé selon la revendication 10, **caractérisé en ce que** lors du drapage un deuxième outil de formage (16, 16'), en particulier une hotte, est réuni au premier outil de formage (15, 15', 15.1) et **en ce que** les tensions des fils sont également régulées pendant le mouvement du deuxième outil de formage (16, 16').

12. Procédé selon l'une des revendications 10 ou 11, **caractérisé en ce que** l'on mesure les tensions de fil dans la région des points de transfert de fil (14, 14.1) et/ou entre les stations de déroulement (1, 1.1, 2, 2.1, 3, 3', 4, 4') et les points de transfert de fil (14, 14.1) et **en ce qu'**un fil ou une mèche est affiché(e) aux stations de déroulement individuelles (1, 1.1, 2, 2.1, 3, 3', 4, 4') et/ou aux points de transfert de fil individuels (14, 14.1) pour le réglage des tensions de fil régulées.

13. Procédé selon l'une quelconque des revendications 10 à 12, **caractérisé en ce qu'**un nombre différent de fils ou de mèches peut être affiché aux stations de déroulement individuelles (1, 1.1, 2, 2.1, 3, 3', 4, 4') et/ou aux points de transfert de fil individuels (14, 14.1) en particulier pour l'adaptation à la forme tridimensionnelle du premier et/ou du deuxième outil de formage (15, 15', 15.1, 16, 16').

14. Procédé selon l'une quelconque des revendications 10 à 13, **caractérisé en ce que** la pince respective (10, 10.1, 11, 11.1, 12, 12.1) est déplacée de telle manière que la tension de fil se règle.

15. Procédé selon l'une quelconque des revendications 10 à 14, **caractérisé en ce qu'**après et/ou pendant le drapage, les fils ou les mèches sont fixés sous forme stable, en particulier par une activation d'un matériau liant (18), et de préférence par la chaleur et/ou la pression.
